# EUROPÄISCHE PATENTSCHRIFT

(11) **EP 4 378 593 B1**
(45) Veröffentlichungstag und Bekanntmachung des Hinweises auf die Patenterteilung: **20.08.2025**
(21) Anmeldenummer: 23000173.7
(22) Anmeldetag: 01.12.2023
(51) Int. Cl.: B05B 14/00, B08B 5/04, B01D 19/00, B08B 9/035, B08B 9/032

(54) **ENTLÜFTUNGSVORRICHTUNG**
DEAERATING DEVICE
DISPOSITIF DÉSAÉRANT

(30) Priorität: 02.12.2022 DE 102022004530
(43) Veröffentlichungstag der Anmeldung: 05.06.2024
(73) Patentinhaber: Polyplan-GmbH Polyurethan-Maschinen, 82064 Straßlach (DE)
(72) Erfinder: Achter, Martin, 82067 Ebenhausen (DE)
(74) Vertreter: Koch Müller Patentanwaltsgesellschaft mbH

(56) Entgegenhaltungen:
- CN-U- 205 165 094
- US-A1- 2009 127 352
- US-B1- 6 398 337

## Beschreibung

Die Erfindung betrifft eine Entlüftungsvorrichtung.

Vorrichtungen zum Ausbringen oder applizieren von Fluiden sind hinlänglich bekannt. Derartige Vorrichtungen umfassen eine Lanze mit einem Fluidsystem und einer Applikationsdüse, die unter anderem auch als Spritzdüse bezeichnet wird.

Insbesondere bei Anwendungen in der Automobilindustrie ist eine gleichmäßiges und zuverlässiges applizieren von Fluiden besonders wichtig, wobei die Applikationsdüse gerade nach einem Wechsel des Fluids sofort einsatzfähig sein sollte ,ohne dass insbesondere in der Zuleitung und der Düse Gas- oder Lufteinschlüsse in Form von Blasen ein gleichmäßiges punktgenaues Ausbringen des Fluids d.h. der Flüssigkeit beeinträchtigen. Hierfür ist eine Entlüftung der mit Fluid beaufschlagten Fluidleitungen und Düsen sehr wichtig, um bereits bei Beginn des Applizierens einen unterbrechungsfreien Sprühnebel oder Sprühstrahl erzeugen zu können.

Bestehende Entlüftungsvorrichtungen werden an die Vorrichtungen zum Ausbringen von Fluiden angeflanscht. Anschließend werden die notwendigen Entleerungsschritte oder Entlüftungsschritte durchgeführt.

Aus der US 2009/127352 ist eine Entlüftungsvorrichtung für die Reinigung einer Spritzpistolendüse und gleichzeitigem Schutz des Nutzers vor Exposition von giftigen Dämpfen aus Reinigungsflüssigkeiten. Diese bekannte Entlüftungsvorrichtung besteht aus einem zylinderförmigen Behälter, welcher über eine stirnseitige Leitung mit einer Vakuumpumpe fluidverbunden ist, und weist auf der Mantelfläche einen Durchbruch auf, über welchen ein zylindrisches Rohr in den Innenraum des Behälters geführt ist. Das außenseitige Ende dieses Rohres weist als Düsenandockvorrichtung einen auf das Ende des Rohres aufgesetzten elastischen Muffe als Saugdüse zur Aufnahme der Düse der Spritzpistole. Wird in das über das Ende des Rohres überstehenden Ende dieser Muffe die Düse der Spritzpistole eingeführt, weitet sich das Ende der Muffe unter Anpassung an die konische Form der Spitzpistolendüse auf. Das offene Ende der elastischen Muffe ist mit einer Membran verschlossen und weist einen Schlitz auf, über welchen die Spritzpistolendüse eingeführt wird, so dass die Membran eine fluiddichte Verbindung zur Spritzpistolendüse herstellt.

Des Weiteren offenbart die US 6 398 337 B1 eine Reinigungsvorrichtung zum Reinigen eines Druckkopfes eines Tintenstrahldruckers. Diese Reinigungsvorrichtung wird nach einem Druckvorgang unter den Druckkopf geführt und dort mit einer Düsenfläche mittels einer Membran aus weichem Silicongummi fluiddicht verbunden. Die Membran ist auf einer Andockvorrichtung der Reinigungsvorrichtung angeordnet, so dass im angedockten Zustand des Druckkopfes an der Reinigungsvorrichtung die Düsenfläche in einen Düsenaufnahmeraum ragt, in dessen Bodenfläche eine Rohrverbindung zu einer Vakuumpumpe endet.

Die CN 205 165 094 U beschreibt eine Absaugvorrichtung für Klebstoff. Diese Absaugvorrichtung umfasst einen mobilen Träger, auf welchem ein Behälter angeordnet ist, der mit einem Vakuumpumpe fluidverbunden ist. Der Behälter ist mit zwei Hohlräumen ausgebildet, wobei ein erster Hohlraum ellipsoidförmig und ein zweiter Hohlraum quaderförmig ausgebildet ist. Der ellipsoidförmige Hohlraum steht mit seiner Hauptachse senkrecht auf einer waagerechten Ebene des mobilen Trägers und weist am höchsten Punkt eine Absaugdüse zum Absaugen von Restklebstoff aus einer Düse einer Klebstoffauftragungsvorrichtung auf. Im Bereich des niedrigsten Punktes des ellipsoidförmigen Hohlraums ist dieser mit dem zweiten Hohlraum verbunden, welcher seinerseits über eine Fluidleitung an die Vakuumpumpe angeschlossen ist.

Aus der US 2014 190532 A1, der DE 285 4325 A1, der EP 033 3040 B1 und der DE 362 0079 A1 sind weitere Reinigungsvorrichtungen und Verfahren zum Reinigen bekannt.

Vor dem Hintergrund besteht die Aufgabe der Erfindung darin, eine Vorrichtung und ein Verfahren anzugeben, die den Stand der Technik weiterbildet.

Die Aufgabe wird gelöst durch eine Entlüftungsvorrichtung mit den Merkmalen des Patentanspruchs 1und von einer Applikationsanlage mit den Merkmalen des Anspruchs 9. Vorteilhafte Ausgestaltungen der Erfindung sind Gegenstand von Unteransprüchen.

Gemäß dem ersten Gegenstand der Erfindung wird eine Entlüftungsvorrichtung zur Entlüftung einer Applikationsanlage bereitgestellt.

Die Applikationsanlage umfasst eine Applikationsdüse, wobei die Applikationsdüse mittels eines Fluidleitungssystems mit einer Fluidquelle verbunden ist.

Die Entlüftungsvorrichtung umfasst eine Düsenandockvorrichtung für die Aufnahme der Applikationsdüse mit einem Düsenaufnahmeraum und einer elastischen Stülpmanschette.

Die Stülpmanschette weist in einer axialen Richtung der Düsenandockvorrichtung einen Durchgang für die Applikationsdüse in den Düsenaufnahmeraum und die Applikationsdüse eine Außenfläche auf.

Die Stülpmanschette ist beim Einführen der Applikationsdüse in den Düsenaufnahmeraum von der Außenfläche der Applikationsdüse rundherum beabstandet.

Die Stülpmanschette liegt nach dem Einführen der Applikationsdüse an der Außenfläche der Applikationsdüse an, um den Düsenaufnahmeraum gegenüber einer Umgebung abzudichten.

Ferner ist ein axial verschiebbarer Aufweitring vorgesehen, um vor dem Einführen der Applikationsdüse die Stülpmanschette von der Außenfläche zu beabstanden. Mit dem Aufweitring lässt sich die Größe d.h. der Durchmesser der Öffnung an der Spitze der Stülpmanschette einfach reversibel und schnell ändern. Anders ausgedrückt, der Aufweitring ist in vor dem Einführen in einer ersten Position angeordnet und nach dem Einführen der Applikationsdüse in einer zweiten Position angeordnet, wobei die erste Position von dem Düsenaufnahmeraum weiter entfernt als die zweite Position ist.

Für eine Vergrößerung des Durchmessers der Öffnung bzw. des Durchgangs wird der Aufweitring in axialer Richtung nach oben an die erste Position d.h. weiter entfernt von dem Düsenaufnahmeraum für eine Verkleinerung des Durchmessers der Öffnung wird Aufweitring entgegengesetzt nach unten in die zweite Position d.h. näher an den Düsenaufnahmeraum verschoben.

Es versteht sich, dass mittels des Verschiebens des Aufweitrings der Innendurchmesser d.h. der Durchgang an der Spitze der Stülpmanschette reversibel vergrößert oder verkleinert wird.

In einer Weiterbildung umfasst der Aufweitring ein Metall oder besteht aus einem Metall. In einer anderen Weiterbildung weist der Aufweitring einen konstanten Durchmesser auf.

Der Düsenaufnahmeraum ist mit einer Vakuumpumpe verbunden, um in dem Düsenraum einen Unterdruck zu erzeugen und Flüssigkeit von der Applikationsdüse abzusaugen.

Es sei angemerkt, dass die axiale Richtung entlang der Längserstreckung der Applikationsdüse ausgebildet ist. Des Weiteren ist die Außenfläche als Dichtfläche insbesondere glatt und eben ausgebildet.

Auch ist die Außenfläche zylindrisch ausgeformt und weist in einer Weiterbildung eine Erstreckung in einem Bereich zwischen 2 mm und 100 mm.

In einer anderen Weiterbildung liegt die Erstreckung in einem Bereich zwischen 10 mm und 50 mm.

In einer Weiterbildung weist die Applikationsdüse insbesondere in dem Bereich der Außenfläche einen Durchmesser zwischen 5 mm und 100 mm oder die Außenfläche weist im Bereich der Außenfläche einen Durchmesser zwischen 10 mm und 40 mm auf.

In einer anderen Weiterbildung weist die Applikationsdüse entlang der Erstreckung einen einheitlichen maximalen Durchmesser auf.

Es sei angemerkt, dass die Applikationsdüse und das mit der Applikationsdüse verbundene als Zuleitung ausgebildete Fluidsystem als Teil einer Lanze ausgebildet sind.

In einer Weiterbildung weist die Außenfläche der Applikationsdüse einen in einer axialen Richtung konstanten Durchmesser auf.

Derartige Lanzen sind vorzugsweise Teil eines Roboters. Der Roboter umfasst des Weiteren eine Fluidquelle d.h. einen Vorratsbehälter und steuert die Lanze mittels Aktuatoren. Die Lanze weist mehrere Gelenke auf, um eine dreidimensionale Bewegung der Applikationsdüse zu ermöglichen.

Ferner sei angemerkt, dass die Stülpmanschette ein elastisches Material umfasst oder aus einem elastischen Material besteht, wobei die Stülpmanschette eine konisch zulaufende Spitze mit einer Öffnung d.h. einen Durchgang umfasst. Hierbei weist die Öffnung einen ersten Durchmesser auf.

Die Größe der Öffnung, d.h. der Durchmesser der Öffnung ist aufgrund des elastischen Materials variabel und reversibel. Vorzugsweise umfasst das elastische Material EPDM oder Gummi und ist gasdicht ausgebildet. Es sei versteht sich, dass die Stülpmanschette eine Innenseite und eine Außenseite aufweist.

Die Innenseite der konisch zulaufenden Spitze der Stülpmanschette ist bei dem Einführen der Applikationsdüse bezogen auf die Außenfläche der Applikationsdüse rundherum von der Außenfläche der Applikationsdüse beabstandet. Der Abstand zwischen der Innenseite der Stülpmanschette und der Außenfläche der Applikationsdüse ist senkrecht zu der axialen Richtung ausgebildet. Anders ausgedrückt, der Durchmesser der Öffnung der Stülpmanschette ist größer als der Außendurchmesser der Applikationsdüse.

In einer Weiterbildung ist der Abstand zwischen der Innenseite der Stülpmanschette und der Außenfläche der Applikationsdüse rundherum in einer ersten Näherung gleich groß oder genau gleich groß.

In einer Ausführungsform liegt vor oder bei dem Einführen der Applikationsdüse der Abstand zwischen der Innenseite der Stülpmanschette und der Außenfläche der Applikationsdüse in einem Bereich zwischen 1 mm und 10 mm oder in einem Bereich zwischen 2 mm und 5 mm.

Es versteht sich, dass die Außenfläche in Verbindung mit der Stülpmanschette als Dichtfläche ausgebildet ist. Anders ausgedrückt, die Außenfläche ist vorzugsweise glatt bzw. eben ausgebildet, sodass sich mit der Stülpmanschette eine zuverlässige Abdichtung ausbilden lässt.

In einer anderen Ausführungsform bildet die Innenseite der Stülpmanschette in der axialen Richtung eine Dichtlänge zwischen 0,2 mm und 30 mm oder zwischen 1 mm und 10 mm auf.

In einer anderen Weiterbildung ist die Öffnung vor dem Einführen und oder nach dem Einführen der Applikationsdüse oval oder konzentrisch ausgebildet.

Nach dem Einführen der Applikationsdüse wird der Durchmesser der Stülpmanschette derart verringert, dass ein Teil der Innenseite der Stülpmanschette an der Außenfläche der Applikationsdüse anliegt und den Düsenraum dicht gegen die Umgebung abschließt. Die Öffnung bzw. der Durchgang weist nun einen zweiten Durchmesser auf.

Mittels der Vakuumpumpe lässt sich ein Unterdruck ausbilden, um Flüssigkeit und gegebenfalls Gasblasen aus der Applikationsdüse und dem Fluidleitungssystem abzusaugen.

Durch die konische Ausbildung der Spitze der Stülpmanschette liegt ein Teil der Innenseite in einem oberen Bereich der Spitze flächig an der Außenfläche der Applikationsdüse an, wobei sich die Größe der dichtenden Fläche mit Ausbildung eines Unterdrucks in dem Düsenraum weiter erhöht. Hierdurch wird die Zuverlässigkeit der Abdichtung verbessert.

Ein Vorteil ist es, dass sich mit dem reversiblen Aufweiten d.h. dem Vergrößerern des Durchmessers und dem Verringern des Durchmessers der konischen Spitze, die Applikationsdüse zuverlässig und einfach in die Stülpmanschette und folglich in den Düsenraum einführen und wieder entfernen lässt. Eine feste mechanische Verbindung vor einer Entlüftung, wie ein Anflanschen und Abbauen unter Verwendung von separaten Befestigungsmittel wie Schrauben und Klammern entfällt.

Indem bei eingeführter Applikationsdüse und verkleinertem Durchmesser ein Teil der Innenseite an der Außenfläche unmittelbar anliegt und den Düsenraum gegen die Umgebung abdichtet, lässt sich schnell und zuverlässig nach dem Einführen der Applikationsdüse ein Unterdruck, nachfolgend auch als Vakuum bezeichnet, aufbauen.

Ein weiterer Vorteil ist, dass in einer Anwendungsform das Fluidleitungssystem d.h. die Zuleitung zu der Applikationsdüse als auch insbesondere die Applikationsdüse sowohl leer saugen lassen und gegebenfalls durch Hinzufügen von Reinigungsfluiden auch reinigen lassen.

In einer anderen Anwendungsform lässt sich die Zuleitung und die Applikationsdüse entlüften, sodass sich bei einem Applizieren von Fluiden, beispielsweise durch ein Besprühen oder Bespritzen von Schweißnähten, ein gleichmäßiges Auftragen ausschließlich an den vorgesehen Stellen ermöglicht wird.

Indem bei dem Entlüften ein Unterdruck anliegt, wird die Größe der eventuell im Fluidsystem d.h. Zuleitung zu der Applikationsdüse und in der Applikationsdüse in Form von Blasen befindliche Luft oder Gas exponentiell zum abfallenden Druck vergrößert. Hierdurch lässt sich die gesamte Vorrichtung, umfassend wenigstens das Fluidsystem und die Applikationsdüse, in jeder Lage d.h. lageunabhängig schnell und einfach entlüften. Die stark vergrößerten Blasen werden einfach von dem Volumenstrom mitgerissen.

Nach dem Absaugen der Flüssigkeit, d.h. nach einem ausreichenden Absaugen von Flüssigkeit aus der Applikationsdüse und aus der Zuleitung d.h. dem Fluidsystem, wird der Durchmesser der Stülpmanschette erweitert, so dass die Applikationsdüse sich mühelos entfernen lässt.

Ein weiterer Vorteil ist, dass sich die Entlüftungsvorrichtung stationär in der Nähe eines Systems mit Applikationsdüse anordnen lässt. Insbesondere ist es hierdurch möglich, nach einem entsprechenden Programmieren, beispielsweise eine robotergesteuerte Lanze derart zu programmieren, dass die Applikationsdüse zu gegebener Zeit in die Öffnung eingeführt wird. Hierbei lässt sich die Entlüftungsvorrichtung derart steuern, dass bei einem Heranfahren die Größe der Öffnung bereits geöffnet wird, um die Applikationsdüse ohne Wartezeit einzuführen.

Vorzugsweise wird nach dem Absaugen von Flüssigkeit der Unterdruck entweder durch Aufweiten d. h. Vergrößern des Durchmessers und oder durch eine andere Art von Belüftung abgebaut.

In einer Weiterbildung wird erst der Unterdruck durch eine Belüftungsvorrichtung abgebaut und dann der Durchmesser der Öffnung d.h. des Durchgangs an der Spitze der Stülpmanschette vergrößert.

Es sei angemerkt, dass bei dem Vergrößern des Durchmessers an der Spitze der Stülpmanschette sich ein Spalt zwischen der Innenseite der Stülpmanschette und der Außenfläche ausbildet und der Düsenraum in Folge dessen sich belüftet. Es versteht sich auch, dass während der Belüftung keine Vakuum erzeugende Geräte an dem Düsenraum eingeschaltet bzw. angeschlossen sind.

In einer anderen Weiterbildung ist der Düsenaufnahmeraum über einen Auffangbehälter mit der Vakuumpumpe verbunden. Mit dem Auffangbehälter lassen sich die abgesaugten Flüssigkeiten einfach auffangen.

In einer Ausführungsform weist eine Fluidleitung ein Einschaltventil auf, wobei die Fluidleitung den Auffangbehälter mit dem Düsenaufnahmeraum verbindet.

In einer anderen Ausführungsform weist eine den Auffangbehälter mit der Vakuumpumpe verbindende Fluidleitung einen Belüftungskugelhahn auf. In einer Weiterbildung ist der Belüftungskugelhahn manuell oder mittels eines Aktuators elektrisch bedien- bzw. steuerbar.

In einer Weiterbildung weist der Belüftungskugelhahn einen Einlass-Schalldämpfer auf. Ein Vorteil des Einlassschalldämpfers ist es, dass sich Geräusche beim Bellüften der Entlüftungsanlage stark reduzieren lassen.

In einer anderen Weiterbildung weist die Vakuumpumpe einen Auslassschalldämpfer auf. Mit dem Auslassschalldämpfer werden die seitens der Vakuumpumpe emittierten Schallwellen stark reduziert.

Ein Vorteil der Schalldämpfer ist es, dass die Entlüftungsvorrichtung in einem Betrieb wesentlich weniger Schall bzw. Lärm emittiert.

In einer Weiterbildung ist der Durchgang von dem den Düsenaufnahmeraum weiter entfernt, als der Rest der Stülpmanschette. Anders ausgedrückt der Durchgang liegt an der Spitze der Stülpmanschette

In einer anderen Weiterbildung umfasst die Entlüftungsvorrichtung eine mobile Unterlage. Hierdurch lässt sich die Entlüftungsvorrichtung an unterschiedlichen Positionen insbesondere in einer Fertigungsumgebung einfach verschieben. Ein Vorteil ist, dass sich die Entlüftungsvorrichtung an unterschiedlichen Orten bei verschiedenen räumlich beanstandeten Vorrichtungen mit Applikationsdüsen verwenden lassen.

In einer Weiterbildung ist die Entlüftungsvorrichtung als fahrbare autonome Einheit ausgebildet die selbsttätig zu den an unterschiedlichen räumlichen Positionen angeordneten Applikationsdüsen hinfährt, um eine Entlüftung der jeweiligen Applikationsdüsen durchzuführen.

In einer Ausführungsform umfasst die Entlüftungsvorrichtung eine integrierte Funkschnittstelle für eine Vernetzung in eine industrielle Fertigungsumgebung.

In einem zweiten Gegenstand wird eine Applikationsanlage mit einer Applikationsdüse bereitgestellt. Die Applikationsanlage dient für die Ausgabe eines Fluids auf ein Bauteil.

Die Applikationsanlage umfasst eine robotergeführte Fluidausbringungsvorrichtung mit einer Ausbringungslanze und einer Applikationsdüse und einer Fluidfördereinrichtung. Die Fluidfördereinrichtung ist mit einer Fluidquelle fluidverbunden. Anders ausgedrückt, die Applikationsdüse ist mittels einer Flüssigkeitsleitung d.h. Fluidleitung mit der Fluidquelle verbunden und umfasst eine Entlüftungsvorrichtung.

In einer Weiterbildung ist die Düsenandockvorrichtung der Entlüftungsvorrichtung im Aktionsradius eines die Fluidausbringungsvorrichtung führenden Industrieroboters angeordnet. Hierbei ist die Entlüftungsvorrichtung als stationäre oder mobile Anlage ausgebildet.

In einer anderen Ausführungsform ist die Fluidausbringungsvorrichtung mechanisch mit der Fluidfördereinrichtung verbunden.

In einer Weiterbildung ist die Fluidfördereinrichtung an einem Manipulator des Industrieroboters angeordnet.

Die Größe der Öffnung liegt bei dem Einführen der Applikationsdüse in einem Bereich zwischen 5 mm und 100 mm oder zwischen 10 mm und 100 mm oder zwischen 10 mm und 50 mm.

Die Größe der Öffnung liegt nach dem Einführen der Applikationsdüse, d.h. in dem Zustand in dem die Innenseite der Stülpmanschette die Außenfläche der Applikationsdüse dicht umschließt, in einem Bereich zwischen 3 mm und 100 mm oder zwischen 10 mm und 50 mm.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigen, die
- Figur 1: eine Ansicht auf eine Entlüftungsvorrichtung mit einer Applikationsanlage,
- Figur 2: eine detaillierte Querschnittsansicht auf die Stülpmanschette unmittelbar vor dem Einfahren einer Applikationsdüse,
- Figur 3: eine detaillierte Querschnittsansicht auf die Stülpmanschette nach dem Einfahren der Applikationsdüse.

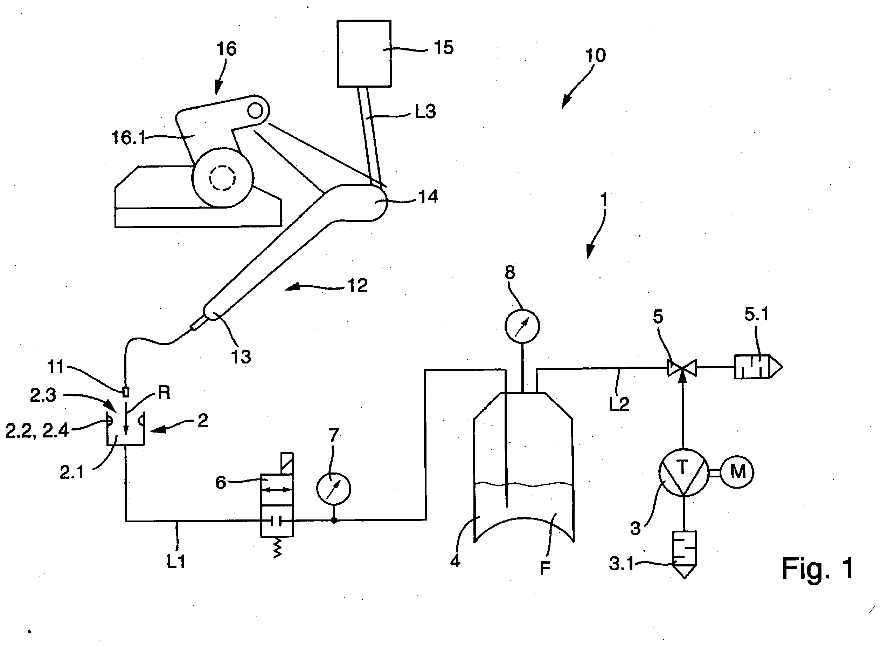

Die Abbildung der Figur 1 zeigt eine Entlüftungsvorrichtung 1 mit einer Applikationsanlage 10.

Die Entlüftungsvorrichtung 1 ist ausgebildet für die Entlüftung der Applikationsanlage 10. Die Applikationsanlage 10 umfasst eine Applikationsdüse 11 und ein die Applikationsdüse 11 mit einer Fluidquelle 15 verbindendes Fluidleitungssystem.

Die Entlüftungsvorrichtung 1 weist eine Düsenandockvorrichtung 2 mit einem Düsenaufnahmeraum 2.1 und einer elastischen Stülpmanschette 2.2 auf.

Die Stülpmanschette 2.2 weist in einer axialen Richtung R der Düsenandockvorrichtung 2 eine Öffnung d.h. einen Durchgang 2.3 für die Applikationsdüse 11 in den Düsenaufnahmeraum 2.1 auf.

Die Applikationsdüse 11 weist eine Außenfläche 11.3 auf, wobei die Stülpmanschette 2.2 beim Einführen der Applikationsdüse 11 in den Düsenaufnahmeraum 2.1 von der Außenfläche 11.3 der Applikationsdüse 11 beabstandet ist.

Nach dem Einführen der Applikationsdüse 11 liegt die Stülpmanschette 2.2 bzw. genauer ausgeführt eine Innenseite der Stülpmanschette 2.2, an der Außenfläche 11.3 der Applikationsdüse 11 an, um den Düsenaufnahmeraum 2.1 gegenüber einer Umgebung abzudichten.

Mit dem Düsenaufnahmeraum 2.1 ist eine Vakuumpumpe 3 verbunden ist, um Flüssigkeit von der Applikationsdüse 11 abzusaugen.

Ferner ist ein axial verschiebbarer Aufweitring 2.4 vorgesehen, um die Stülpmanschette 2.2 vor dem Einführen der Applikationsdüse 11 aufzuweiten.

Der Düsenaufnahmeraum 2.1 ist über einen Auffangbehälter 4 mit der Vakuumpumpe 3 verbunden. Ferner ist der Auffangbehälter 4 mit dem Düsenaufnahmeraum 2.1 über eine Fluidleitung L1 verbunden, wobei die Fluidleitung L1 ein Einschaltventil 6 aufweist.

Der Auffangbehälter 4 ist mit der Vakuumpumpe 3 mittels einer Fluidleitung L2 verbunden, wobei die Fluidleitung L2 einen Belüftungskugelhahn 5 aufweist. Der Belüftungskugelhahn 5 weist einen Einlassschalldämpfer 5.1 zur Lärmreduktion auf.

Außerdem weist die Vakuumpumpe 3 einen Auslass-Schalldämpfer 3.1 auf, um eine Emission von Lärm zu verringern.

In der vorliegenden Ausführung ist die Öffnung bzw. der Durchgang 2.3 weiter von dem den Düsenaufnahmeraum 2.1 entfernt, als der Rest der Stülpmanschette 2.2.

Die Applikationsanlage 10 umfasst für die Ausgabe eines Fluids auf ein Bauteil, eine robotergeführte Fluidausbringungsvorrichtung 12 mit einer Ausbringungslanze 13 und der an einem kopfseitigen Ende der Ausbringungslanze 13 angeordneten Applikationsdüse 11.

Des Weiteren umfasst: Die Applikationsanlage 10 eine Fluidfördereinrichtung 14, wobei die Fluidfördereinrichtung 14 mit einer Fluidquelle 15 fluidverbunden ist.

Vorliegend ist die Düsenandockvorrichtung 2 der Entlüftungsvorrichtung 1 im Aktionsradius eines die Fluidausbringungsvorrichtung 12 führenden Industrieroboters 16 angeordnet. Die Fluidausbringungsvorrichtung 12 ist mechanisch mit der Fluidfördereinrichtung 14 verbunden.

Außerdem ist die Fluidfördereinrichtung 14 an einem Manipulator 16.1 des Industrieroboters 16 angeordnet.

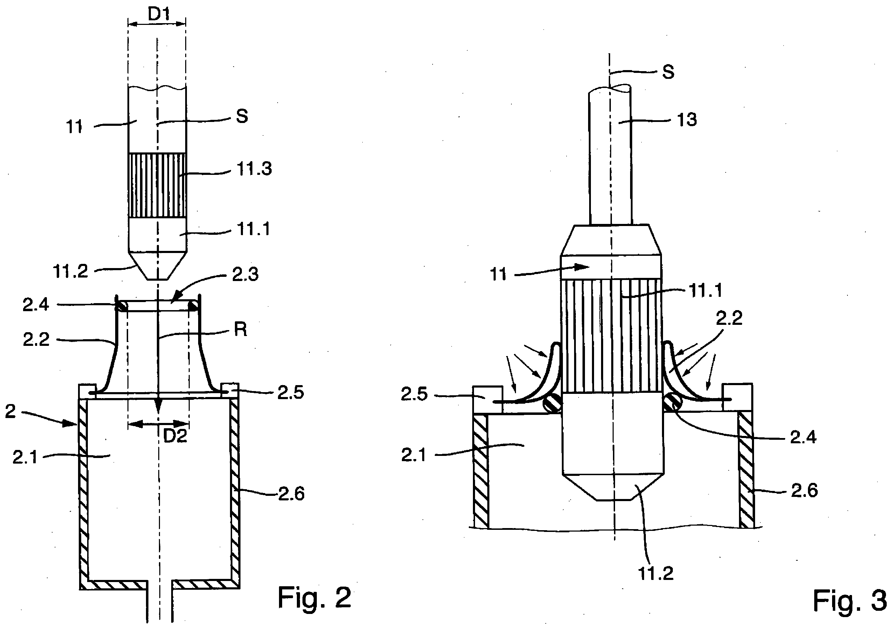

In der Abbildung der Figur 2 ist eine detaillierte Querschnittsansicht auf die Stülpmanschette 2.2 unmittelbar vor dem Einfahren einer Applikationsdüse 11 dargestellt. Im Folgenden werden nur die Unterschiede zu der Abbildung der Figur 1 erläutert.

Die Applikationsdüse 11 umfasst einen Applikationskörper 11.1 und einen Applikationskopf 11.2 und eine Außenfläche 11.3. Es versteht sich, dass die Außenfläche 11.3 in Verbindung mit der Stülpmanschette 2.2 als Dichtfläche ausgebildet ist. Anders ausgedrückt, die Außenfläche 11.3 ist vorzugsweise glatt ausgebildet, sodass mit der Stülpmanschette 2.2 eine zuverlässige Abdichtung ausgebildet wird.

Mittels des axial verschiebbaren Aufweitrings 2.4, der sich in einer ersten Position befindet, ist vor dem Einführen der Applikationsdüse 11 die Stülpmanschette 2.2 von der Außenfläche 11.3 beabstandet, indem der Aufweitring 2.4 die Öffnung bzw. den Durchgang 2.3 der Stülpmanschette 2.2 auf einen Durchmesser D2 aufweitet. Der Durchmesser D2 der Öffnung ist größer als der Außendurchmesser D1 der Applikationsdüse 11.

Die Stülpmanschette 2.2 ist mittels eines Befestigungsrings 2.5 an einem unteren Ende dicht mit dem Düsenaufnahmeraum 2.1 verbunden.

Die Applikationsdüse 11 wird in der axialen Richtung R durch die Stülpmanschette 2.2 in den Düsenaufnahmeraum 2.1 eingeführt, wobei Düsenaufnahmeraum 2 einen Aufnahmebecher 2.6 umfasst.

In der Abbildung der Figur 3 ist eine weitere detaillierte Querschnittsansicht auf die Stülpmanschette 2.2 nach dem Einfahren der Applikationsdüse 11 dargestellt. Im Folgenden werden nur die Unterschiede zu der Abbildung der Figur 2 erläutert.

Nach dem Einführen des kopfseitigen Endes der Applikationslanze 13 entlang einer Symmetrieachse S ist der Aufweitring 2.4 in eine zweite Position nahe an dem Düsenaufnahmeraum 2.1 angeordnet, wobei ein Teil der Innenseite der Stülpmanschette 2.2. dicht an der Außenfläche 11.3 des Applikationskörper 11.1 anliegt. Der Applikationskopf 11.2 von der Applikationsdüse 11 ist nun vollständig in die Stülpmanschette 2.2. eingeschoben.

Die Kraft auf die Außenfläche 11.3 seitens der Stülpmanschette 2.2. ist allseitig gleich groß, so dass die resultierende Kraft senkrecht zu der axialen Richtung R Null oder nahezu Null ist.

### BEZUGSZEICHEN

- 1: Entlüftungsvorrichtung

- 2: Düsenandockvorrichtung
- 2.1: Düsenaufnahmeraum
- 2.2: Stülpmanschette
- 2.3: Durchgang der Stülpmanschette 2.2
- 2.4: Aufweitring
- 2.5: Befestigungsring
- 2.6: Aufnahmebecher

- 3: Vakuumpumpe

- 4: Auffangbehälter

- 5: Belüftungskugelhahn
- 5.1: Einlass-Schalldämpfer des Belüftungskugelhahns 5

- 6: Einschaltventil

- 7: Drucksensor

- 8: Drucksensor

- 10: Applikationsanlage

- 11: Applikationsdüse
- 11.1: Applikationskörper
- 11.2: Applikationskopf
- 11.3: Außenfläche der Applikationsdüse 11

- 12: Fluidausbringungsvorrichtung
- 12.1: Ausbringungslanze der Fluidausbringungsvorrichtung

- 13: Ausbringungslanze

- 14: Fluidfördereinrichtung

- 15: Fluidquelle

- 16: Industrieroboter
- 16.1: Manipulator

- D1: Durchmesser des Applikationskörpers 11.1
- D2: Innendurchmesser des Aufweitrings 2.4
- F: Fluid
- L1: Fluidleitung
- L2: Fluidleitung
- L3: Fluidleitung
- R: axiale Richtung der Düsenandockvorrichtung 2
- S: Symmetrieachse

## Patentansprüche

1. Entlüftungsvorrichtung (1) für die Entlüftung einer Applikationsanlage (10), welche ein eine Applikationsdüse (11) mit einer Fluidquelle (15) verbindendes Fluidleitungssystem aufweist, umfassend
- eine Düsenandockvorrichtung (2) mit einem Düsenaufnahmeraum (2.1) und einer elastischen Stülpmanschette (2.2), wobei die Stülpmanschette (2.2) in einer axialen Richtung (R) der Düsenandockvorrichtung (2) einen Durchgang (2.3) für die eine Außenfläche (11.3) aufweisende Applikationsdüse (11) in den Düsenaufnahmeraum (2.1) aufweist, wobei - die Stülpmanschette (2.2) beim Einführen der Applikationsdüse (11) in den Düsenaufnahmeraum (2.1) von der Außenfläche (11.3) der Applikationsdüse (11) beabstandet ist und die Stülpmanschette (2.2) nach dem Einführen der Applikationsdüse (11) an der Außenfläche (11.3) der Applikationsdüse (11) anliegt, um den Düsenaufnahmeraum (2.1) gegenüber einer Umgebung abzudichten,
- einen axial verschiebbarer Aufweitring (2.4), um vor dem Einführen der Applikationsdüse (11) die Stülpmanschette (2.2) von der Außenfläche (11.3) zu beabstanden, und
- eine Vakuumpumpe (3), welche mit dem Düsenaufnahmeraum (2.1) verbunden ist, um Flüssigkeit von der Applikationsdüse (11) abzusaugen.

2. Entlüftungsvorrichtung (1) Anspruch 1, **dadurch gekennzeichnet, dass** der Düsenaufnahmeraum (2.1) über einen Auffangbehälter (4) mit der Vakuumpumpe (3) verbunden ist.

3. Entlüftungsvorrichtung (1) nach Anspruch 2, **dadurch gekennzeichnet, dass** eine den Auffangbehälter (4) mit dem Düsenaufnahmeraum (2.1) verbindende Fluidleitung (L1) ein Einschaltventil (6) aufweist.

4. Entlüftungsvorrichtung (1) nach Anspruch 2 oder 3, **dadurch gekennzeichnet, dass** eine den Auffangbehälter (4) mit der Vakuumpumpe (3) verbindende Fluidleitung (L2) einen Belüftungskugelhahn (5) aufweist.

5. Entlüftungsvorrichtung (1) nach Anspruch 4, **dadurch gekennzeichnet, dass** der Belüftungskugelhahn (5) einen Einlass-Schalldämpfer (5.1) aufweist.

6. Entlüftungsvorrichtung (1) nach einem der vorhergehenden Ansprüche, **dadurch gekennzeichnet, dass** die Vakuumpumpe (3) einen Auslass-Schalldämpfer (3.1) aufweist.

7. Entlüftungsvorrichtung (1) nach einem der vorhergehenden Ansprüche, **dadurch gekennzeichnet, dass** der Durchgang (2.3) weiter von dem den Düsenaufnahmeraum (2.1) entfernt ist, als der Rest der Stülpmanschette (2.2).

8. Entlüftungsvorrichtung (1) nach einem der vorhergehenden Ansprüche, **dadurch gekennzeichnet, dass** eine mobile Unterlage vorgesehen ist.

9. Applikationsanlage (10) zur Ausgabe eines Fluids auf ein Bauteil, umfassend
- eine robotergeführte Fluidausbringungsvorrichtung (12) mit einer Ausbringungslanze (13), einer Applikationsdüse (11) und einer Fluidfördereinrichtung (14), wobei die Fluidfördereinrichtung (14) mit einer Fluidquelle (15) fluidverbunden ist, und
- eine Entlüftungsvorrichtung (1) nach einem der Ansprüche 1 bis 8.

10. Applikationsanlage (10) nach Anspruch 9, **dadurch gekennzeichnet, dass** die Düsenandockvorrichtung (2) der Entlüftungsvorrichtung (1) im Aktionsradius eines die Fluidausbringungsvorrichtung (12) führenden Industrieroboters (16) angeordnet ist.

11. Applikationsanlage (10) nach einem der Ansprüche 9 oder 10, **dadurch gekennzeichnet, dass** die Fluidfördereinrichtung (14) an einem Manipulator (16.1) des Industrieroboters (16) angeordnet ist.

## Claims

1. Deaeration device (1) for deaeration of an application installation (10) which has a fluid conducting system connecting an application nozzle (11) with a fluid source (15), comprising
- a nozzle docking device (2) with a nozzle receiving space (2.1) and an elastic cuff sleeve (2.2), wherein the cuff sleeve (2.2) has in an axial direction (R) of the nozzle docking device (2) a passage (2.3) for the application nozzle (11), which has an outer surface (11.3), into the nozzle receiving space (2.1), wherein the cuff sleeve (2.2) on introduction of the application nozzle (11) into the nozzle receiving space (2.1) is spaced from the outer surface (11.3) of the application nozzle (11) and the cuff sleeve (2.2) after the introduction of the application nozzle (11) bears against the outer surface (11.3) of the application nozzle (11) so as to seal the nozzle receiving space (2.1) relative to the environment,
- an axially displaceable widening ring (2.4) in order to space the cuff sleeve (2.2) from the outer surface (11.3) prior to introduction of the application nozzle (11) and
- a vacuum pump (3) which is connected with the nozzle receiving space (2.1) in order to suck liquid from the application nozzle (11).

2. Deaeration device (1) according to claim 1, **characterised in that** the nozzle receiving space (2.1) is connected with the vacuum pump (3) by way of a collecting container (4).

3. Deaeration device (1) according to claim 2, **characterised in that** a fluid line (L1) connecting the collecting container (4) with the nozzle receiving space (2.1) comprises a switch-on valve (6).

4. Deaeration device (1) according to claim 2 or 3, **characterised in that** a fluid line (L2) connecting the collecting container (4) with the vacuum pump (3) comprises a ventilating ball valve (5).

5. Deaeration device (1) according to claim 4, **characterised in that** the ventilating ball valve (5) comprises an inlet sound damper (5.1).

6. Deaeration device (1) according to any one of the preceding claims, **characterised in that** the vacuum pump (3) comprises an outlet sound damper (3.1).

7. Deaeration device (1) according to any one of the preceding claims, **characterised in that** passage (2.3) is spaced further from the nozzle receiving space (2.1) than the rest of the cuff sleeve (2.2).

8. Deaeration device (1) according to any one of the preceding claims, **characterised in that** a mobile support is provided.

9. Application installation (10) for issue of a fluid to a component, comprising
- a robot-guided fluid delivery device (12) with a delivery lance (13), an application nozzle (11) and a fluid conveying device (14), wherein the fluid conveying device (14) is in fluid connection with a fluid source (15), and
- a deaeration device (1) according to any one of claims 1 to 8.

10. Application installation (10) according to claim 9, **characterised in that** the nozzle docking device (2) of the deaeration device (1) is arranged in the radius of action of an industrial robot (16) guiding the fluid delivery device (12).

11. Application installation (10) according to one of claims 9 and 10, **characterised in that** the fluid conveying device (14) is arranged at a manipulator (16.1) of the industrial robot (16).

## Revendications

1. Dispositif de purge (1) pour la purge d'une installation d'application (10) qui présente un système de conduite de fluide reliant une buse d'application (11) à une source de fluide (15), comprenant
- un dispositif d'accouplement de buse (2) avec un logement de buse (2.1) et un manchon rabattable élastique (2.2), le manchon rabattable (2.2) présentant, dans une direction axiale (R) du dispositif d'accouplement de buse (2), un passage (2.3) pour la buse d'application (11) présentant une surface extérieure (11.3) dans le logement de buse (2.1), dans lequel - le manchon rabattable (2.2) lors de l'introduction de la buse d'application (11) est espacé de la surface extérieure (11.3) de la buse d'application (11) et le manchon rabattable (2.2), après introduction de la buse d'application (11), est en appui contre la surface extérieure (11.3) de la buse d'application (11) afin d'isoler le logement de buse (2.1) par rapport à un environnement,
- une bague d'écartement (2.4) déplaçable axialement pour écarter le manchon rabattable (2.2) de la surface extérieure (11.3) avant l'introduction de la buse d'application (11), et
- une pompe à vide (3) qui est reliée au logement de buse (2.1) afin d'aspirer le liquide de la buse d'application (11).

2. Dispositif de purge (1) selon la revendication 1, **caractérisé en ce que** le logement de buse (2.1) est relié à la pompe à vide (3) par l'intermédiaire d'un récipient collecteur (4).

3. Dispositif de purge (1) selon la revendication 2, **caractérisé en ce qu'**une conduite de fluide (L1) reliant le récipient collecteur (4) au logement de buse (2.1) comporte une vanne d'enclenchement (6).

4. Dispositif de purge (1) selon la revendication 2 ou 3, **caractérisé en ce qu'**une conduite de fluide (L2) reliant le récipient collecteur (4) à la pompe à vide (3) comporte un robinet à boisseau sphérique de purge (5).

5. Dispositif de purge (1) selon la revendication 4, **caractérisé en ce que** le robinet à boisseau sphérique de purge (5) comporte un silencieux d'entrée (5.1).

6. Dispositif de purge (1) selon l'une des revendications précédentes, **caractérisé en ce que** la pompe à vide (3) comporte un silencieux de sortie (3.1).

7. Dispositif de purge (1) selon l'une des revendications précédentes, **caractérisé en ce que** le passage (2.3) est plus éloigné de la chambre de réception des buses (2.1) que le reste du manchon rabattable (2.2).

8. Dispositif de purge (1) selon l'une des revendications précédentes, **caractérisé en ce qu'**un support mobile est prévu.

9. Installation d'application (10) pour distribuer un fluide sur un composant, comprenant :
- un dispositif robotisé de distribution de fluide (12) avec une lance de distribution (13), une buse d'application (11) et un dispositif de transport de fluide (14), le dispositif de transport de fluide (14) étant relié à une source de fluide (15), et
- un dispositif de purge (1) selon l'une des revendications 1 à 8.

10. Installation d'application (10) selon la revendication 9, **caractérisée en ce que** le dispositif d'accouplement de buse (2) du dispositif de purge (1) est disposé dans le rayon d'action d'un robot industriel (16) guidant le dispositif de distribution de fluide (12).

11. Installation d'application (10) selon l'une des revendications 9 ou 10, **caractérisée en ce que** le dispositif d'alimentation en fluide (14) est disposé sur un manipulateur (16.1) du robot industriel (16).
